# EUROPEAN PATENT APPLICATION

(11) **EP 2 530 589 A2**
(43) Date of publication of application: **05.12.2012**
(21) Application number: 12167942.7
(22) Date of filing: 14.05.2012
(51) Int. Cl.: G06F 9/455

(54) **System and method for updating virtual machine template**

(30) Priority: 02.06.2011 TW 100119322
(71) Applicant: Hon Hai Precision Industry Co., Ltd., New Taipei City (TW)
(72) Inventor: Tsai, Cheng-Feng, Tu-Cheng, New Taipei (TW); Yeh, Chien-Fa, Tu-Cheng, New Taipei (TW); Lee, Chung-I, Tu-Cheng, New Taipei (TW)
(74) Representative: Gray, John James

(57) **Abstract**

A remote computer and method deploys a first or a second virtual machine template in the cloud servers at the time interval. The remote computer sets the first virtual machine template power-off state, and deploys the first virtual machine template in each of the cloud servers. The remote computer sets the second virtual machine template power-off state, and deploys the second virtual machine template in the cloud server, in response to a determination that update of the second virtual machine template completes. The remote computer replaces the first virtual machine template with the second virtual machine template.

## Description

### BackGround

### Technical Field

Embodiments of the present disclosure relate to virtual machine technology, and particularly to a virtual machine template updating system and method.

### Description of Related Art

A virtual machine template is a reusable image created from a virtual machine. The virtual machine template, as a derivative of the source virtual machine, includes virtual hardware components, an installed guest operating system and software application(s). With the virtual machine template, many repetitive installation and configuration tasks for the virtual machine can be avoided. Usually, deploying the virtual machine template in a power-off state can be more stable. The reason is that errors may result in deployment interruption, when the virtual machine template is running. However, if the virtual machine template needs updates, deployment of the virtual machine template needs to stop until the virtual machine template finishes the updates. This may cause a long downtime for the user, while waiting for the update. Therefore, more useful and convenient methods to overcome the above mentioned delay for deploying the virtual machine templates in the computers are desired.

### Summary

According to one aspect of the disclosure, a remote computer in electronic communication with cloud servers of a data center is provided. The remote computer includes a storage system storing a first virtual machine template and a second virtual machine template, at least one processor, one or more programs stored in the storage system and being executable by the at least one processor, the one or more programs comprising: an assignment module that assigns an IP address by a dynamic host configuration protocol (DHCP) service of the remote computer to each of the cloud servers, a setting module that sets the first virtual machine template in a power-off state, and deploys the first virtual machine template in each of the cloud servers; the setting module that sets the second virtual machine template in a power-on state, and starts an automatic updating function of the second virtual machine template in the remote computer, a determination module that determines if update of the second virtual machine template completes; the setting module that sets the second virtual machine template in the power-off state, and deploys the second virtual machine template in each of the cloud servers, in response to a determination that update of the second virtual machine template completes, the replacement module that replaces the first virtual machine template with the second virtual machine template.

According to another aspect of the disclosure, a computer-based data installation method is provided. The computer-based data installation method includes assigning an IP address by a dynamic host configuration protocol (DHCP) service of the remote computer to each of the cloud servers, setting the first virtual machine template in a power-off state, and deploying the first virtual machine template in each of the cloud servers, setting the second virtual machine template in a power-on state, and starting an automatic updating function of the second virtual machine template, setting the second virtual machine template in the power-off state, and deploying the second virtual machine template in each of the cloud servers, in response to a determination that update of the second virtual machine template completes, replacing the first virtual machine template with the second virtual machine template.

According to a further aspect of the disclosure, a non-transitory computer-readable medium is provided. The non-transitory computer-readable medium has stored instructions that, when executed by a remote computer, causes the remote computer to perform an installation method as described above. For example, the storage medium is a non-transitory storage medium.

According to a still further aspect of the disclosure, a computer program product is provided. The computer program product having machine readable instructions, which, when executed by an electronic device, causes the remote computer to perform the related terms search method as described above.

### BRIEF DESCRIPTION OF THE DRAWINGS

FIG. 1 is a system view of one embodiment of a virtual machine template updating system.

FIG. 2 is a block diagram of one embodiment of a remote computer included in FIG.1.

FIG. 3 is a flowchart of one embodiment of an installation method.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

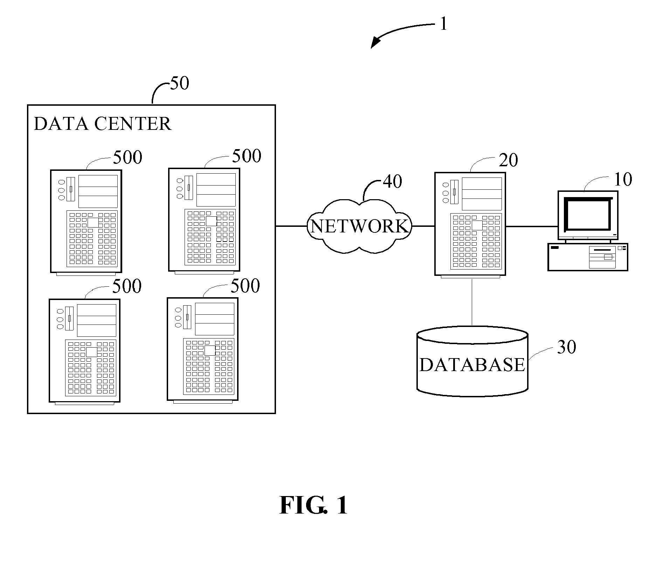

FIG. 1 is a system view of one embodiment of a virtual machine template updating system 1. In one embodiment, the virtual machine template updating system 1 may include a remote computer 20 and a data center 50. The data center 50 is designed for cloud computing capability and capacity including a plurality of cloud servers 500. The remote computer 20 is connected to the data center 50 via a network 40. The network 40 may be, but is not limited to, a wide area network (e.g., the Internet) or a local area network. The virtual machine template updating system 1 may be used to deploy a virtual machine template in each of the cloud servers 500. It is understood that deploying a virtual machine template includes an installation process of a virtual machine template and an activation process of the virtual machine template. In one embodiment, if the virtual machine template is deployed into the cloud servers 500, then the virtual machine template is installed into the cloud servers 500 and is activated to be available for use. Using open database connectivity (ODBC) or java database connectivity (JDBC), for example, the remote computer 20 electronically connects to a database system 30. The database system 30 may store the data which is sorted by the remote computer 20. Additionally, each of the one or more client computers 10 provides an operation interface for controlling one or more operations of the remote computer 20.

The remote computer 20 is installed with a pre-boot execute environment (PXE) service. The remote computer 20 can boot the cloud servers 500 by the PXE service.

The remote computer 20 stores a first virtual machine template and a second virtual machine template. A virtual machine template is an operating system image file. It is understood that the operating system image file is defined as a compressed file that contains complete contents and structures of the operating system. A user can use the operating system image file to deploy one or more virtual machines in the cloud servers 500. In one embodiment, the virtual machine template consists of a set of attributes that define a virtual machine. The set of attributes can be used repeatedly to create the one or more virtual machines having the set of attributes. The set of attributes may include capacity of a virtual machine (e.g., amount of RAM required for the virtual machine, a percentage of CPU required for the virtual machine, and a number of virtual CPUs), operating system vector attributes (e.g., CPU architecture to virtualization, a path to the kernel to boot a image, a boot device type), disk vector attributes (e.g., a disk type, a size, a file system type), network vector attributes (e.g., a name of the network, an ID of the network, internet protocol, a MAC address, a bridge). A user can use the first or second virtual machine template to deploy the one or more virtual machines in the cloud servers 500. The remote computer 20 further stores a virtual machine controlling application. It is understood that the virtual machine controlling application is defined as a software application that deploys the first and second virtual machine templates in the cloud servers 500. The virtual machine controlling application may be, but is not limited to, a VMWARE VCENTER.

In one embodiment, the remote computer 20 alternately deploys a first or a second virtual machine template in the cloud servers 500 at a time interval. The time interval is not set at a fixed time. In contrast, the time interval is a time to complete updating of the first or second virtual machine template before the first or second virtual machine template is deployed in each of the cloud servers 500. For example, assuming that the virtual machine template updating system 1 initially deploys the first virtual machine template in each of the cloud servers 500. The second virtual machine template takes ten minutes to finish updating, and the remote computer 20 deploys the second virtual machine template in each of the cloud servers 500, then the interval time is ten minutes.

The remote computer 20, in one example, can be also a dynamic host configuration protocol (DHCP) server. The remote computer 20 is installed with a DHCP service. In one embodiment, the remote computer 20 assigns IP addresses to the cloud servers 500 by the DHCP service. The remote computer 20 may provide three modes for allocating IP addresses to the cloud servers 500. The modes are dynamic allocation, automatic allocation, and static allocation. In one embodiment, the remote computer 20 uses dynamic allocation to assign the IP addresses to the cloud servers 500. For example, when the remote computer 20 receives a request from a cloud server 500 via the network 40, the remote computer 20 dynamically assigns an IP address, and offers the remote computer 10 with the IP address. In one embodiment, the remote computer 20 may be a personal computer (PC), a network server, or any other data-processing equipment.

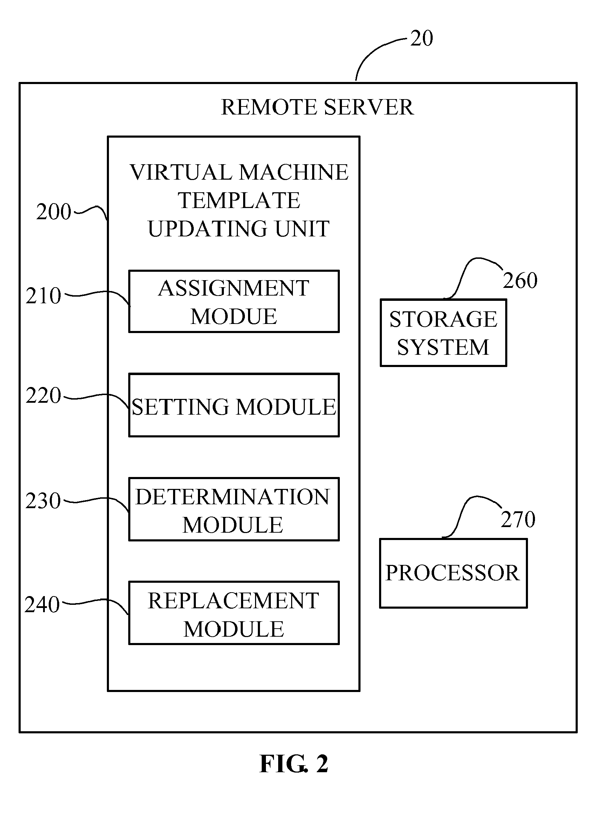

FIG. 2 is a block diagram of one embodiment of the remote computer 20. The remote computer 20 includes a virtual machine template updating unit 200. The virtual machine template updating unit 200 may be used to deploy the virtual machine templates in the cloud servers 500. The remote computer 20 includes a storage system 260, and at least one processor 270. In one embodiment, the virtual machine template updating unit 20 includes an assignment module 210, a setting module 220, a determination module 230, and a replacement module 240. The modules 210-240 may include computerized code in the form of one or more programs that are stored in the storage system 260. The computerized code includes instructions that are executed by the at least one processor 270 to provide functions for the modules 210-240. The storage system 260 may be a cache or a memory, such as an EPROM, HDD, or flash memory.

The assignment module 210 assigns an IP address by the DHCP service to each cloud server 500 of the data center 50 to communicate with each cloud server 500.

The setting module 220 sets the first virtual machine template in a power-off state and deploys the first virtual machine template in each cloud server 500. It is secure and safe to deploy the first virtual machine template in each cloud server 500 when the first virtual machine template is in the power-off state. In contrast, assuming that the first virtual machine template is in a power-on state, if the first virtual machine template has an error when the first virtual machine template is running, the error may result in deployment interruption. Additionally, the first virtual machine template is set automatically by the virtual machine controlling application in the power-off state and a user does not need to manually set the first virtual machine template.

The setting module 220 sets a second virtual machine template in at he power-on state and starts an automatic updating function of the second virtual machine template. As mentioned above, the first and second virtual machine templates are operating system image files, for example, WINDOWS SERVER 2008, the operating system includes the automatic updating function for updating the second virtual machine template. The setting module 220 automatically starts the automatic updating function of the second virtual machine template.

The determination module 230 determines if the update of the second virtual machine template completes. In one embodiment, if the update of the second virtual machine template completes, the second virtual machine template resets. The determination module 230 determines if the update of the second virtual machine template completes by determining if the second virtual machine template resets.

The setting module 220 sets the second virtual machine template in the power-off state and deploys the second virtual machine template in the cloud servers 500.

The replacement module 240 replaces the first virtual machine template with the second virtual machine template. After the process of replacing the first virtual machine template with the second virtual machine template, the first virtual machine is set in the power-on state and the automatic updating function of the first virtual machine template is started.

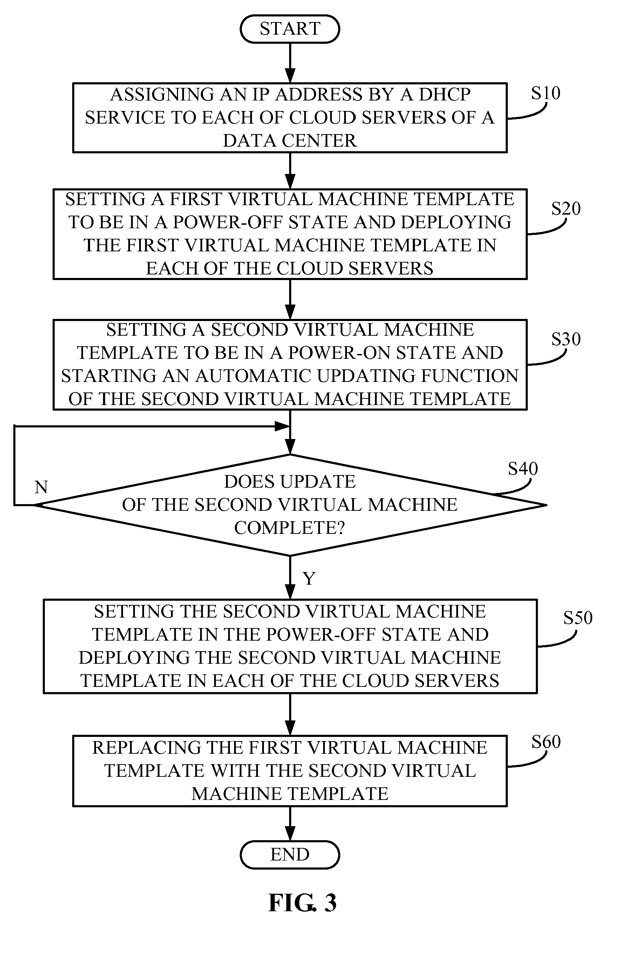

FIG. 3 is a flowchart of one embodiment of a virtual machine template updating method. Depending on the embodiment, additional blocks may be added, others deleted, and the ordering of the blocks may be changed.

In block S10, the assignment module 210 assigns an IP address by the DHCP service to each of the cloud servers 500 of the data center 50 to communicate with the cloud server 500.

In block S20, the setting module 220 sets a first virtual machine template in a power-off state and deploys the first virtual machine template in each of the cloud servers 500. When the first virtual machine template is in the power-off state, the virtual machine template cannot be updated.

In block S30, the setting module 220 sets a second virtual machine template in a power-on state and starts an automatic updating function of the second virtual machine template. For example, the second virtual machine template is WINDOWS SERVER 2008, the setting module 220 automatically starts the automatic updating function of the WINDOWS SERVER 2008.

In block S40, the determination module 230 determines if the update of the second virtual machine template completes. In one embodiment, if the update of the second virtual machine template has not completed, block S40 is repeated. Otherwise, if the update of the second virtual machine template completes, the second virtual machine template resets, the procedure goes to block S50.

In block S50, the setting module 220 sets the second virtual machine template in the power-off state and deploys the second virtual machine template in the cloud servers 500.

In block S60, the replacement module 240 replaces the first virtual machine template with the second virtual machine template. After the process of replacing the first virtual machine template with the second virtual machine template, the first virtual machine is set in the power-on state and the automatic updating function of the first virtual machine template is started.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A remote computer, the remote computer in electronic communication with cloud servers of a data center, comprising:
a storage system storing a first virtual machine template and a second virtual machine template;
at least one processor; and
one or more programs stored in the storage system and being executable by the at least one processor, the one or more programs comprising:
an assignment module that assigns an IP address by a dynamic host configuration protocol (DHCP) service of the remote computer to each of the cloud servers;
a setting module that sets the first virtual machine template in a power-off state, and deploys the first virtual machine template in each of the cloud servers;
the setting module that sets the second virtual machine template in a power-on state, and starts an automatic updating function of the second virtual machine template in the remote computer;
a determination module that determines if update of the second virtual machine template completes; and
the setting module that sets the second virtual machine template in the power-off state, and deploys the second virtual machine template in each of the cloud servers, in response to a determination that update of the second virtual machine template completes; and
the replacement module that replaces the first virtual machine template with the second virtual machine template.

2. The remote computer of claim 1, wherein the first and second virtual machine templates comprise a set of attributes that define a virtual machine.

3. The remote computer of claim 2, wherein the set of attributes are used repeatedly to create one or more virtual machines having the set of attributes.

4. The remote computer of claim 1, wherein the first and second virtual machine templates are operating system image files, and the operating system image files are compressed files that contain complete contents and structures of the operating system.

5. The remote computer of claim 1, wherein the determination module determines that the update of the second virtual machine template completes upon the condition that the second virtual machine template resets.

6. A computer-based installation method being performed by execution of computer readable program code by a processor of a remote computer, the remote computer in electronic communication with cloud servers of a data center, the remote computer storing a first virtual machine template and a second virtual machine template, the method comprising:
assigning an IP address by a dynamic host configuration protocol (DHCP) service of the remote computer to each of the cloud servers;
setting the first virtual machine template in a power-off state, and deploying the first virtual machine template in each of the cloud servers;
setting the second virtual machine template in a power-on state, and starting an automatic updating function of the second virtual machine template;
setting the second virtual machine template in the power-off state, and
deploying the second virtual machine template in each of the cloud servers, in response to a determination that update of the second virtual machine template completes; and
replacing the first virtual machine template with the second virtual machine template.

7. The method of claim 6, wherein the first and second virtual machine templates comprise a set of attributes that define a virtual machine.

8. The method of claim 7, wherein the set of attributes are used repeatedly to create one or more virtual machines having the set of attributes.

9. The method of claim 6, wherein the first and second virtual machine templates are operating system image files, and the operating system image files are compressed files that contain complete contents and structures of the operating system.

10. The method of claim 6, wherein the update of the second virtual machine template completes upon the condition that the second virtual machine template resets.

11. A non-transitory computer-readable medium having stored thereon instructions that, when executed by a remote computer, the remote computer in electronic communication with cloud servers of a data center, the remote computer storing a first virtual machine template and a second virtual machine template, causing the remote computer to perform an installation method, the method comprising:
assigning an IP address by a dynamic host configuration protocol (DHCP) service of the remote computer to each of the cloud servers;
setting the first virtual machine template in a power-off state, and deploying the first virtual machine template in each of the cloud servers;
setting the second virtual machine template in a power-on state, and starting an automatic updating function of the second virtual machine template; and
setting the second virtual machine template in the power-off state, and
deploying the second virtual machine template in each of the cloud servers, in response to a determination that update of the second virtual machine template completes; and
replacing the first virtual machine template with the second virtual machine template.

12. The non-transitory medium of claim 11, wherein the first and second virtual machine templates comprise a set of attributes that define a virtual machine.

13. The non-transitory medium of claim 12, wherein the set of attributes are used repeatedly to create one or more virtual machines having the set of attributes.

14. The non-transitory medium of claim 9, wherein the first and second virtual machine templates are operating system image files, and the operating system image files are compressed files that contain complete contents and structures of the operating system.

15. The non-transitory medium of claim 9, wherein the update of the second virtual machine template completes upon the condition that the second virtual machine template resets.
